# EUROPEAN PATENT SPECIFICATION

(11) **EP 2 030 513 B1**
(45) Date of publication and mention of the grant of the patent: **14.09.2016**
(21) Application number: 07767298.8
(22) Date of filing: 20.06.2007
(51) Int. Cl.: A23L 27/20, A23L 27/40, A23L 27/00, A23L 2/56

(54) **SALTY-TASTE ENHANCER**
SALZ-GESCHMACKVERSTÄRKER
EXHAUSTEUR DE GOÛT SALÉ

(30) Priority: 21.06.2006 JP 2006171939; 04.08.2006 JP 2006213707; 18.06.2007 JP 2007160731
(43) Date of publication of application: 04.03.2009
(73) Proprietor: Adeka Corporation, Tokyo 116-8554 (JP)
(72) Inventor: IKEDA, Kenji, Tokyo; 116-8554 (JP)
(74) Representative: Forstmeyer, Dietmar
(86) International application number: PCT/JP2007/062460
(87) International publication number: WO 2007/148742

(56) References cited:
- CN-A- 1 077 115
- JP-A- S6 336 763
- JP-A- 2001 245 627
- JP-A- 2006 141 223
- JP-A- 2006 141 227
- O'CONNOR P L ET AL: "Sodium Lactate/Sodium Chloride Effects on Sensory Characteristics and Shelf-Life of Fresh Ground Pork", JOURNAL OF FOOD SCIENCE, WILEY-BLACKWELL PUBLISHING, INC, US, vol. 58, no. 5, 1 September 1993 (1993-09-01), pages 978-980, XP003020217, ISSN: 0022-1147, DOI: 10.1111/J.1365-2621.1993.TB06092.X
- BREWER M S ET AL: "Sensory Characteristics of Potassium Lactate and Sodium Chloride in a Model System", JOURNAL OF SENSORY STUDIES, FOOD AND NUTRITION PRESS, WETPORT, CN, US, vol. 10, no. 1, 1 April 1995 (1995-04-01), pages 73-87, XP003020218, ISSN: 0887-8250, DOI: 10.1111/J.1745-459X.1995.TB00005.X
- O'CONNOR P.L. ET AL.: 'Sodium Lactate/Sodium Chloride Effects on Sensory Characteristics and Shelf-Life of Fresh Ground Pork' J. FOOD SCI. vol. 58, no. 5, 1993, pages 978 - 980, XP003020217
- BREWER M.S. ET AL.: 'Sensory Characteristics of Potassium Lactate and Sodium Chloride in a Model System' J. SENS. STUD. vol. 10, no. 1, 1995, pages 73 - 87, XP003020218
- M. Susan Brewer ET AL: "Sodium Lactate Effects on Shelf-Life, Sensory, and Physical Characteristics of Fresh Pork Sausage", Journal of Food Science, vol. 56, no. 5, 1 September 1991 (1991-09-01), pages 1176-1178, XP055169188, ISSN: 0022-1147, DOI: 10.1111/j.1365-2621.1991.tb04727.x
- M. Susan Brewer ET AL: "SOME EFFECTS OF SODIUM LACTATE ON SHELF-LIFE, SENSORY, AND PHYSICAL CHARACTERISTICS OF VACUUM-PACKAGED BEEF BOLOGNA", Journal of Food Quality, vol. 15, no. 5, 1 October 1992 (1992-10-01), pages 369-382, XP055169190, ISSN: 0146-9428, DOI: 10.1111/j.1745-4557.1992.tb00963.x
- L.S. Papadopoulos ET AL: "Consumer and Trained Sensory Comparisons of Cooked Beef Top Rounds Treated with Sodium Lactate", Journal of Food Science, vol. 56, no. 5, 1 September 1991 (1991-09-01), pages 1141-1146, XP055169191, ISSN: 0022-1147, DOI: 10.1111/j.1365-2621.1991.tb04720.x

## Description

### Technical Field

The present invention relates to a method for enhancing a salty taste of a food or beverage.

### Background Art

A salty taste that is one of the five basic tastes does not merely serve as a favorite taste but has an effect of bringing out good tastes of foods and beverages and enhancing appetite, and it is thus very important as a taste of foods and beverages.

Salt, namely sodium chloride is generally used to give a salty taste to foods and beverages. Since excessive intake of sodium, a major component of sodium chloride, is a risk factor for many health-related diseases including hypertension, so that it is recommended to control the intake of sodium chloride. Various reduced salt foods and beverages with a reduced amount of sodium chloride have been thus developed and marketed. When only the added amount of sodium chloride is reduced, however, a salty taste, one of basic tastes, is naturally reduced to make the taste light and deteriorate deliciousness.

Accordingly, various studies have been made to reduce the content of sodium chloride while keeping a salty taste of a food or beverage unchanged.

The methods are roughly classified into a method in which a sodium chloride substitute is used and a method in which a salty taste enhancer is used.

The sodium chloride substitutes are substances that have a salty taste similar to that of sodium chloride and reduce a sodium chloride content by substituting for part or all of sodium chloride used in foods and beverages, and are represented by potassium chloride and alkaline metal salts of organic acids.

However, sodium chloride substitutes such as potassium chloride have a lighter salty taste than sodium chloride and they have an astringent taste and/or a bitter taste in addition to a salty taste. When an amount of sodium chloride substituted is increased, a food or beverage obtained has a lighter salty taste and suffers from a problem of changes in taste quality.

On the other hand, salty taste enhancers have no or only light salty taste, but they are substances having an effect of enhancing a feeling of a salty taste of sodium chloride when added in an extremely small amount to sodium chloride. With the use of a salty taste enhancer, even foods and beverages having a low sodium chloride content can have a salty taste equal to that of foods and beverages having a high sodium chloride content.

Since this method can reduce the sodium chloride content of a food or beverage without causing a large change in taste quality, a large number of substances such as capsaicin (see, for example, Patent Document 1), trehalose (see, for example, Patent Document 2), protein hydrolysates (see, for example, Patent Document 3), and specific surfactants (see, for example, Patent Document 4) have been proposed.

However, since the effect of these salty taste enhancers to enhance a salty taste is very weak, these salty taste enhancers must be used in a large amount when a high salty taste enhancing effect is demanded on foods and beverages having a low sodium chloride content. In this case, since these salty taste enhancers have strong tastes other than a salty taste, there is a problem of causing a change in taste quality of foods and beverages, for example, a hot taste is strongly felt in the method of Patent Document 1; a sweat taste in the method of Patent Document 2; a bitter taste in the method of Patent Document 3, and an unpleasant taste in the method of Patent Document 4.

As described above, no salty taste enhancers that can achieve a sufficient effect with an extremely small amount used without changing the taste quality of foods and beverages have been obtained. In addition, no methods that can reduce a sodium chloride content while keeping the taste quality and salty taste of foods and beverages have been obtained.

Patent Document 1: Japanese Patent Laid-open Publication No. 2001-245627
Patent Document 2: Japanese Patent Laid-open Publication.No. H10-66540
Patent Document 3: WO 01/039613
Patent Document 4: Japanese Patent Laid-open Publication No. H5-184326

Further prior art is disclosed in JP S63 36 763 which relates to the treatment of fish roe; O'Connor P.L. et al.: "Sodium Lactate/Sodium Chloride Effects on Sensory Characteristics and Shelf-Life of Fresh Ground Pork; "Journal of Food Science Vol. 58, no. 5, 1993, pages 978 to 986; and Brewer M. S. et al.: "Sensory Characteristics of Potassium Lactate and Sodium Chloride in a Model System", Journal of Sensory Studies, Vol. 10, no. 1, 1995, pages 73 to 87.

### Disclosure of the Invention

Accordingly, an object of the present invention is to provide a method for enhancing a salty taste of a food or beverage that can enhance a salty taste of the food or beverage while keeping the taste quality of the food or beverage.

The present inventors have made various studies to achieve the above objects and found that sodium lactate and/or potassium lactate have an effect of enhancing a salty taste of sodium chloride even with an extremely small amount added to sodium chloride and scarcely have a bitter taste or astringent taste. The present invention has been achieved based on the above findings and provides a method for enhancing a salty taste of a food or beverage containing sodium chloride, comprising:
adding a salty taste enhancer comprising sodium lactate and/or potassium lactate as active ingredient(s) to the food or beverage,
wherein the added amount of the salty taste enhancer is 0.0001 to 1.5 parts by mass as sodium lactate and/or potassium lactate contained in the salty taste enhancer with respect to 100 parts by mass of sodium chloride contained in the food or beverage.

### Best Mode for Carrying Out the Invention

The salty taste enhancer used in the present invention contains sodium lactate and/or potassium lactate as active ingredient(s). In the salty taste enhancer, as sodium lactate and/or potassium lactate, their formulation themselves may be used and a food or beverage containing sodium lactate and/or potassium lactate may also be used.

Although a mass ratio in terms of sodium lactate:potassium lactate is not particularly limited and arbitrary, the ratio is preferably in the range of 100:0 to 20:80 and more preferably 100:0 to 60:40, since these ratios provide a stronger effect and a better taste.

As the salty taste enhancer, sodium lactate and/or potassium lactate may be used alone as they are or may be used after mixing with various additives and formulating in the forms such as powder, granules, tablets, and liquid by an ordinary method. The content of sodium lactate and/or potassium lactate in these formulations as a~solid content is preferably 1 to 100% by mass, more preferably 5 to 100% by mass, further preferably 10 to 100% by mass, and the most preferably 50 to 100% by mass.

For the salty taste enhancer, examples of preferable food or beverage containing sodium lactate and/or potassium lactate are cheese whey, sake lee and the like.

Examples of the additives for formulation in the forms such as powder, granules and tablets include polysaccharide thickeners such as alginates, pectin, seaweed polysaccharides, carboxymethyl cellulose and the like; excipients such as lactose, starch, silicon dioxide and the like; sweeteners such as glucose, fructose, sucrose, maltose, sorbitol, stevia and the like; anticaking agents such as fine silicon dioxide, magnesium carbonate, disodium hydrogen phosphate, magnesium oxide, calcium carbonate and the like; vitamins; perfumes; antioxidants; brighteners and the like. One kind or two or more kinds of these are appropriately selected and used. The content of these various additives in the salty taste enhancer is preferably 99% by mass or less and further preferably 90% by mass or less, although the content varies depending on the kind of additives.

When the salty taste enhancer is formulated in a liquid form, the formulation can be obtained by dissolving or dispersing the enhancer in a liquid. Examples of such liquid include water, ethanol, propylene glycol and the like. The content of the liquid in the salty taste enhancer is preferably 99% by mass or less and more preferably 90% by mass or less.

In order to obtain a higher salty taste enhancing effect, the salty taste enhancer preferably contains a calcium ion sequestering agent in addition to sodium lactate and/or potassium lactate.

Examples of the calcium ion sequestering agent include sodium dihydrogen phosphate, potassium dihydrogen phosphate, disodium hydrogen phosphate, dipotassium hydrogen phosphate, trisodium phosphate, tripotassium phosphate, sodium tripolyphosphate, potassium tripolyphosphate, sodium pyrophosphate, potassium pyrophosphate, trisodium citrate, tripotassium citrate, sodium alginate, potassium alginate and the like, and one kind or two or more kinds of these can be used.

The content of the calcium ion sequestering agent is preferably 1 to 5000 parts by mass and further preferably 10 to 1000 parts by mass with respect to 100 parts by mass of a total of sodium lactate and potassium lactate, although its appropriate content differs depending on the kind of the agent and the type of food for which the salty taste enhancer is used.

Next, the salt composition will be described.

The salt composition comprises sodium chloride and the salty taste enhancer and is a seasoning that has an enhanced salty taste while maintaining taste quality equal to that of conventional salt consisting only of sodium chloride.

The proportion of the salty taste enhancer to sodium chloride in the salt composition is such that a total amount of sodium lactate and potassium lactate contained in the salty taste enhancer is 0.0001 to 1.5 parts by mass, more preferably 0.001 to 0.5 part by mass, and further preferably 0.002 to 0.1 part by mass with respect to 100 parts by mass of sodium chloride. When the total amount of sodium lactate and potassium lactate is less than 0.0001 part by mass, the salty taste enhancing effect is hardly obtained, and when the amount exceeds 1.5 parts by mass, the salty taste enhancing effect is weakened and the taste quality may also be adversely affected.

For the salt composition, part of sodium chloride, preferably 80% by mass or less of sodium chloride, more preferably 60% by mass or less of sodium chloride may be substituted with a known sodium chloride substitute in order to reduce a sodium chloride content.

Examples of the sodium chloride substitute are potassium chloride, alkaline metal salts of organic acids and the like. Among them, the use of potassium chloride is preferable for the salt composition since potassium chloride can substitute for a larger amount of sodium chloride while maintaining equal taste quality and salty taste.

The salt composition may contain, in addition to sodium chloride and the salty taste enhancer, other ingredients including flavor materials such as powdered green tea, coffee and the like, sugars, anticaking agents, vitamins, perfumes, spices, colorants, antioxidants, brightening agents and the like. The content of these other ingredients in the salt composition is preferably 70% by mass or lower, more preferably 30% by mass or lower, and further preferably 10% by mass or lower.

Next, the food or beverage will be described.

The content of the salt composition added to the food or beverage is not particularly limited and is appropriately determined according to the food or beverage for which the salt composition is used or the strength of salty taste desired.

The food or beverage is not particularly limited and the salt composition can be generally used without problem in foods that use salt consisting only of sodium chloride, for example, seasonings such as miso (soybean paste), soy sauce, sauce for Japanese noodles, mop sauce, Japanese soup stock, sauce for pastas, dressing, mayonnaise, tomato ketchup, Worcester sauce, sauce for pork cutlet, dried seasoning powder, herb salt, seasoned salt and the like; instant cooked foods such as Japanese clear soup powder, curry roux, white sauce, seasoning for rice in green tea, soup stock cube and the like; soups such as miso soup, Japanese clear soup, consomme soup, cream soup and the like; processed livestock products such as ham, sausage, cheese and the like; processed marine products such as fish sausage, dried fish, salted fish gut, food boiled in soy sauce, chinmi (culinary delicacy) and the like; processed vegetable products such as pickles and the like; snacks such as potato chips, rice crackers and the like; bakery foods such as bread loaf, sweet bun, cookies and the like; cooked foods such as boiled foods, fried foods, grilled foods, curry, stew, gratin, boiled rice, rice porridge, rice balls and the like; and others.

The salt composition can be used for foods and beverages that contain no salt, if the foods and beverages contain salt upon eating or drinking.

The food or beverage is characterized in that the taste quality of the food or beverage is maintained while a salty taste per sodium chloride content is enhanced. Further, for the salt composition in which part of sodium chloride is substituted with potassium chloride, a salty taste per sodium chloride content can be further enhanced.

In other words, when the salt composition is used as a substitute for salt contained in a conventional food or beverage, a food or beverage that has salty taste and taste quality equal to those of the conventional food or beverage can be obtained even with a reduced amount added, and the food or beverage can be used quite preferably as a reduced salt food or beverage.

Accordingly, there can be obtained a reduced salt food or beverage that has much better taste quality than conventional reduced salt foods and beverages in which only the sodium chloride content is reduced and reduced salt foods and beverages in which part or all of sodium chloride is substituted with a sodium chloride substitute, and a reduced salt food or beverage that has a further lower sodium chloride content than conventional reduced salt foods and beverages in which the sodium chloride content is reduced by using conventional salty taste enhancers.

The reduced salt food or beverage refers to a food or beverage that has a sodium chloride content of 10 to 90% by mass, preferably 20 to 80% by mass, more preferably 30 to 70% by mass lower than that of ordinary foods and beverages. If the sodium chloride content is reduced by less than 10% by mass, the obtained product cannot be said as a reduced salt food or beverage, and when the content is reduced by more than 90% by mass, a salty taste of equal strength to that of ordinary foods and beverages is hardly obtained even with the salt compositions.

When the food or beverage is a reduced salt food or beverage, the content of the salt composition is preferably such that the sodium chloride content is reduced by 10 to 90% by mass and preferably 20 to 80% by mass as compared with that of ordinary foods and beverages for the above reason.

As a method of incorporating the salt composition into a food or beverage, methods in which the salt composition is added during manufacturing or upon eating can be mainly used. Specifically, a method in which sodium chloride and the salty taste enhancer are added separately during manufacturing or upon eating; a method in which sodium chloride is added to a food or beverage containing the salty taste enhancer during manufacturing or upon eating; a method in which the salty taste enhancer is added to a food or beverage containing sodium chloride during manufacturing or upon eating, and the like may be mentioned. In other words, it is sufficient that sodium chloride and the salty taste enhancer are contained at the proportion and content described above in a food or beverage by the time of eating the food or beverage.

The method for enhancing a salty taste of a food or-beverage according to the present invention will be described.

In the method for enhancing a salty taste of a food or beverage according to the present invention, the salty taste enhancer is added to a food or beverage and a salty taste is enhanced while taste quality of the food or beverage is maintained.

The added amount of the salty taste enhancer to a food or beverage is 0.0000001 to 1 part by mass, preferably 0.000001 to 0.5 part by mass, and more preferably 0.00002 to 0.1 part by mass as a total of sodium lactate and potassium lactate contained in the salty taste enhancer with respect to 100 parts by mass of the food or beverage.

Since a salty taste of the best quality is obtained by the method for enhancing a salty taste of the present invention, a food or beverage to which the salty taste enhancer is to be added contains sodium chloride.

The added amount of the salty taste enhancer to a food or beverage is 0.0001 to 1.5 parts by mass, more preferably 0.001 to 0.5 part by mass, and further preferably 0.002 to 0.1 part by mass as sodium lactate and/or potassium lactate contained in the salty taste enhancer with respect to 100 parts by mass of sodium chloride contained in the food or beverage. When the added amount is less than 0.0001 part by mass or exceeds 1.5 parts by mass, the salty taste enhancing effect is hardly obtained, and when the amount exceeds 1.5 parts by mass, the taste quality of the food or beverage may be adversely affected.

As the method of adding the salty taste enhancer to a food or beverage containing sodium chloride, both a method in which the enhancer is added as a raw material during manufacturing of the food or beverage and a method in which the enhancer is added to and mixed with a food or beverage containing sodium chloride may be used.

Since the salty taste enhancer can enhance a salty taste of a food or beverage with an extremely small amount without changing the taste quality of the food or beverage according to the method for enhancing a salty taste of a food or beverage, afood or beverage that has salty taste strength and taste quality equal to those of conventional foods and beverages can be obtained even when the sodium chloride content of the conventional foods and beverages is reduced.

In other words, a food or beverage to which the salty taste enhancer is to be added is preferably a reduced salt food or beverage. In this case, the food or beverage obtained is also a reduced salt food or beverage.

Specifically, when the salty taste enhancer is added during manufacturing of a food or beverage, a food or beverage that has salty taste strength and taste quality equal to those of conventional foods and beverages can be obtained, although a reduction in sodium chloride content results in reduced salt foods and beverages that in principle have a light taste and lack in deliciousness.

In addition, when the salty taste enhancer is added to a food or beverage, a reduced salt food or beverage that has a light taste and lacks in deliciousness due to a low sodium chloride content can be changed into a food or beverage that has salty taste strength and taste quality equal to those of foods and beverages having an ordinary sodium chloride content in spite of its low sodium chloride content.

Further, in the method for enhancing a salty taste of a food or beverage according to the present invention, a sodium chloride content can be further reduced by replacing part of sodium chloride with a salt substitute such as potassium chloride.

In the method for enhancing a salty taste of a food or beverage according to the present invention, when a food or beverage to which the salty taste enhancer is to be added is a reduced salt food or beverage, the added amount of the salty taste enhancer is 0.0001 to 1.5 parts by mass, more preferably 0.001 to 0.5 part by mass, and further preferably 0.002 to 0.1 part by mass as a total of sodium lactate and potassium lactate contained in the salty taste enhancer with respect to 100 parts by mass of sodium chloride contained in the food or beverage. When the added amount is less than 0.0001 part by mass or exceeds 1.5 parts by mass, the salty taste enhancing effect is hardly obtained and thus a reduced salt food or beverage that has a light taste and lacks in deliciousness may be obtained. When the amount exceeds 1.5 parts by mass, the taste quality of the food or beverage may be adversely affected.

### Examples

### [Examples 1 to 5] Manufacturing of Salty Taste Enhancer

Salty Taste Enhancers A to E were manufactured by mixing sodium lactate powder (fermented Na lactate powder S96/Purac Japan K.K.), a 50% by mass sodium lactate aqueous solution (Wako Pure Chemical Industries, Ltd.), a 80% by mass potassium lactate aqueous solution (Kanto Chemical Co., Inc.), sodium dihydrogen phosphate dihydrate (food additive, Kanto Chemical Co., Inc.), and water according to the formulations shown in Table 1 below. The sodium lactate content, potassium lactate content, and monobasic sodium phosphate content and the ratio between sodium lactate and potassium lactate for the respective salty taste enhancers are also shown in Table 1.

**[Table 1]**

| | | Example 1 | Example 2 | Example 3 | Example 4 | Example 5 |
|---|---|---|---|---|---|---|
| | | Salty Taste Enhancer A | Salty Taste Enhancer B | Salty Taste Enhancer C | Salty Taste Enhancer D | Salty Taste Enhancer E |
| Formulation (parts by mass) | Sodium lactate powder, | 100 | | | | 25 |
| | 50% by mass sodium lactate aqueous solution | | 100 | 50 | | |
| | 80% by mass potassium lactate aqueous solution | | | 31.25 | 62.5 | |
| | Sodium dihydrogen phosphate dihydrate | | | | | 75 |
| | Water | | | 18.75 | 37.5 | |
| Composition (% by mass) | Sodium lactate content | 96 | 50 | 25 | 0 | 24 |
| | Potassium lactate content | 0 | | 25 | 50 | |
| | Monobasic sodium phosphate content | 0 | | | | 57.7 |
| Ratio | Sodium lactate:potassium lactate | 100:0 | 100:0 | 50:50 | 0:100 | 100:0 |

The contents of the respective ingredients except water in the salty taste enhancer are shown.

### [Experimental Example 1]

Each of the Salty Taste Enhancers A to E was added in amounts of 0.0001 part by mass, 0.001 part by mass, 0.01 part by mass, 0.1 part by mass, 1 part by mass, 10 parts by mass, and 20 parts by mass as a total of sodium lactate and potassium lactate with respect to 100 parts by mass of sodium chloride and mixed to manufacture salt compositions, and the salt compositions were evaluated for their salty taste strength and taste quality as described below.

### <Methods of Evaluation of Salty Taste Strength and Taste Quality >

Nine panels were requested to lick the salt compositions obtained in Experimental Example 1 and salt consisting of 100% by mass of sodium chloride as a control and to evaluate the salty taste strength and taste quality in 4 grades according to the Panel Evaluation Criteria shown below. A total score obtained was evaluated in 5 grades according to the <Evaluation Criteria> below. The results are shown in Table 2 for the salty taste strength and in Table 3 for the taste quality.

### <Panel Evaluation Criteria for Salty Taste Strength>

| | |
|---|---|
| Salty taste that is clearly enhanced as compared with the control is felt | 2 points |
| Salty taste that is slightly enhanced as compared with the control is felt | 1 point |
| Salty taste almost equal to that of the control is felt | 0 point |
| Salty taste that is slightly weaker than that of the control is felt | -1 point |

### <Panel Evaluation Criteria for Taste Quality>

| | |
|---|---|
| No taste other than sodium chloride is felt | 2 points |
| Taste other than sodium chloride is felt, but there is no strange feeling as a salty taste | 1 point |
| | |
| Taste other than sodium chloride is felt and there is a strange feeling as a salty taste | 0 point |
| There is an intolerable strange feeling | -1 point |

### <Evaluation Criteria>

Very good: A total score of 9 panels is 15 to 18 points
Good: A total score of 9 panels is 9 to 14 points
Do: A total score of 9 panels is 5 to 8 points
Poor: A total score of 9 panels is 0 to 4 points
Very poor: A total score of 9 panels is lower than 0 point

**[Table 2]**

| Results of Evaluation of Salty Taste Strength | | | | | |
|---|---|---|---|---|---|
| A total amount of sodium lactate and potassium lactate per 100 parts by mass of salt (parts by mass) | Salty Taste Enhancer | | | | |
| | A | B | C | D | E |
| 0.0001 | Very good | Very good | Good | Good | Very Food |
| 0.001 | Very good | Very good | Very good | Good | Very good |
| 0.01 | Very good | Very good | Very good | Very good | Very good |
| 0.1 | Very good | Very good | Very good | Good | Very good |
| 1 | Good | Good | Good | Good | Good |
| 10 | Poor | Poor | Poor | Poor | Poor |
| 20 | Very poor | Very poor | Very poor | Very poor | Very poor |

**[Table 3]**

| Results of Evaluation of Taste Quality | | | | | |
|---|---|---|---|---|---|
| A total amount of sodium lactate and potassium lactate per 100 parts by mass of salt (parts by mass) | Salty Taste Enhancer | | | | |
| | A | B | C | D | E |
| 0.0001 | Very good | Very good | Very good | Very good | Very good |
| 0.001 | Very good Very good | Very good | Very good | Very good | Very good |
| 0.01 | | Very good | Very good | Very good | Very good |
| 0.1 | Good | Good | Good | Good | Good |
| 1 | Good | Good | Do | Do | Do |
| 10 | Do | Do | Do | Do | Poor |
| 20 | Very poor | Very poor | Very poor | Very poor | Very poor |

The results in Table 2 above show that when a total content of sodium lactate and potassium lactate was 0.0001 to 1 part by mass with respect to 100 parts by mass of sodium chloride, the salty taste enhancing effect is observed, and when the total content is 10 parts by mass, the salty taste enhancing effect is not observed and the salty taste is almost the same level as that of sodium chloride. The results in Table 3 above show that when the total content is 10 parts by mass, a taste other than a salty taste is felt and a strange feeling as a salty taste appears and that there is an intolerable strange feeling at 20 parts by mass.

In other words, it is shown that although sodium lactate and/or potassium lactate is unsuitable as a sodium chloride substitute due to occurrence of a strange feeling, they can be used quite preferably as a salty taste enhancer.

It is shown that, among others, the Salty Taste Enhancers A, B, C and E for which the mass ratio between sodium lactate and potassium lactate is in the range from 100:0 to 20:80 have a higher salty taste enhancing effect with a smaller added amount than the Salty Taste Enhancer D for which the mass ratio is outside the range, and especially the Salty Taste Enhancers A, B, and E for which the mass ratio is in the range from 100:0 to 60:40 have a potent salty taste enhancing effect with a further smaller added amount.

### <Manufacturing and Evaluation of Salt Composition and Food or Beverage>

### [Example 6]

Salt Composition A that contained 0.02 part by mass of sodium lactate with respect to 100 parts by mass of sodium chloride was obtained by mixing 82 parts by mass of sodium chloride, 0.0164 part by mass of the Salty Taste Enhancer A, 16 parts by mass of sodium L-glutamate, and 2 parts by mass of corn starch and extruding the mixture to granulate. The Salt Composition A was mixed with black sesame seeds at a mass ratio of 20:80 to obtain Dried Seasoning Powder 1, which is a food or beverage. At the same time, Dried Seasoning Powder 2 was prepared with formulation and manufacturing method similar to those in Example 6, except that the Salty Taste Enhancer A, sodium lactate powder, was not used, to serve as a control. These two types of Dried Seasoning Powder were tasted for comparison. The Dried Seasoning Powder 1, which is a food or beverage according to the present invention, had a clearly stronger salty taste than the Dried Seasoning Powder 2 that did not use the Salty Taste Enhancer A and gave no strange feeling. Accordingly, a salty taste was enhanced without causing a change in taste quality.

### [Example 7]

Salt Composition B according to the present invention was obtained with formulation and manufacturing method similar to those in Example 6, except that 82 parts by mass of sodium chloride in the Salt Composition A in Example 6 were replaced by 41 parts by mass of sodium chloride and 41 parts by mass of potassium chloride. The Salt Composition B was mixed with black sesame seeds at a mass ratio of 20:80 to obtain Dried Seasoning Powder 3, which is a reduced salt food or beverage according to the present invention. The Dried Seasoning Powder 3 and the Dried Seasoning Powder 1 obtained in Example 6 were tasted for comparison. The Dried Seasoning Powder 3, which is a reduced salt food or beverage according to the present invention, had salty taste strength and taste quality almost equal to those of the Dried Seasoning Powder 1 having an ordinary sodium chloride content.

### [Example 8]

Salt Composition C that contained 0.01 part by mass of sodium lactate with respect to 100 parts by mass of sodium chloride was obtained by mixing 40 parts by mass of sodium chloride, 0.004 part by mass of the Salty Taste Enhancer A, 20 parts by mass of sodium L-glutamate, 20 parts by mass of granulated sugar, 15 parts by mass of corn starch, 3 parts by mass of powdered green tea, and 1 part by mass of powdered kelp and extruding the mixture to granulate. To 100 parts by mass of the Salt Composition C, 40 parts by mass of cubic rice cracker and 3 parts by mass of dried laver seaweed were added and mixed to obtain Seasoning for Rice in Green Tea 1, which is a food or beverage according to the present invention. At the same time, Seasoning for Rice in Green Tea 2 was manufactured with similar formulation and manufacturing method, except that no Salty Taste Enhancer A was used, to serve as a control. These two types of Seasoning for Rice in Green Tea were used to prepare boiled rice in green tea and two types of the boiled rice in green tea were tasted for comparison. The boiled rice in green tea prepared with the Seasoning for Rice in Green Tea 1 had a clearly stronger salty taste than the boiled rice in green tea prepared with the Seasoning for Rice in Green Tea 2 containing no Salty Taste Enhancer A and had no strange feeling. Accordingly, a salty taste was enhanced without causing a change in taste quality.

### [Example 9]

Salt Composition D that contained 0.02 part by mass of sodium lactate with respect to 100 parts by mass of sodium chloride was obtained by adding 0.02 part by mass of sodium lactate powder to 100 parts by mass of sodium chloride and thoroughly mixing. Potato was sliced and fried in rapeseed oil to prepare a fried product and 100 parts by mass of the fried product and 1 part by mass of the Salt Composition D were placed in a bag and mixed by shaking to attach the Salt Composition D on the fried product to produce Potato Chip 1, which is a food or beverage according to the present invention. At the same time, Potato Chip 2 was manufactured with similar formulation and manufacturing method, except that salt consisting of 100% by mass of sodium chloride was used in place of the Salt Composition D, to serve as a control. These two types of potato chip were tasted for comparison. While Potato Chip 2 had a weak salty taste and gave an unsatisfying taste, Potato Chip 1, which is a reduced salt food or beverage according to the present invention, had a clearly stronger salty taste and had no strange feeling. Accordingly, a salty taste was enhanced without causing a change in taste quality.

### [Example 10]

Ramen Soup 1, which is a reduced salt food or beverage was manufactured by adding 94.7 parts by mass of hot water to 5 parts by mass of Chinese soup stock (Honkaku Chuka-no-moto/NS Foods Co., Ltd.) and 0.3 part by mass of the Salt Composition D obtained in Example 9. At the same time, Ramen Soup 2 was manufactured with similar formulation and manufacturing method, expect that 0.5 part by mass of salt consisting of 100% by mass of sodium chloride was used in place of 0.3 part by mass of the Salt Composition D, to serve as a control. These two types of ramen soup were tasted for comparison. The Ramen Soup 1, which is a reduced salt food or beverage, had salty taste strength and taste quality almost equal to those of the Ramen Soup 2 having an ordinary sodium chloride content.

### [Example 11]

Salty Rice 1, which is a reduced salt food or beverage, was prepared by adding 0.5 part by mass of the Salt Composition D obtained in Example 9 to 100 parts by mass of polished rice, further adding an appropriate amount of water to the mixture, and boiling the mixture. At the same time, Salty Rice 2 was prepared with similar formulation and manufacturing method, except that 0.9 part by mass of salt consisting of 100% sodium chloride was used in place of 0.5 part by mass of the Salt Composition D, to serve as a control. These two types of salty rice were used to prepare rice balls and the rice balls were tasted for comparison. The rice balls prepared from the Salty

Rice 1 had salty taste strength and taste quality almost equal to those of the rice balls prepared from the Salty Rice 2.

### <Method of Enhancing Salty Taste of Food or Beverage and Evaluation>

### [Example 12]

Low Salt Soy Sauce 1, which is a reduced salt food or beverage, was manufactured by adding 0.01 part by mass of the Salty Taste Enhancer A obtained in Example 1 (about 0.12 part by mass as sodium lactate per 100 parts by mass of salt) to 100 parts by mass of reduced salt soy sauce (Reduced Salt soy sauce/Kikkoman Co., Ltd., sodium chloride content: 8.11% by mass) as a reduced salt food or beverage and thoroughly mixing these. At the same time, soy sauce having an ordinary sodium chloride content (sodium chloride content: 15% by mass) was prepared. These two types of soy sauce were tasted for comparison. The Reduced salt Soy Sauce 1, which is a reduced salt food or beverage had salty taste and taste quality almost equal to those of the soy sauce having an ordinary sodium chloride content.

### [Example 13]

Reduced Salt Soy Sauce 2, which is a reduced salt soy sauce, was manufactured with similar formulation (containing about 0.03 part by mass of sodium lactate per 100 parts by mass of salt) and manufacturing method to those in Example 12, except that the Salty Taste Enhancer E obtained in Example 5 was used in place of the Salty Taste Enhancer A. At the same time, soy sauce having an ordinary sodium chloride content (sodium chloride content: 15% by mass) was prepared. These two types of soy sauce were tasted for comparison. The Reduced Salt Soy Sauce 2 which is a reduced salt food or beverage, had the salty taste and taste quality closer to those of the soy sauce having an ordinary sodium chloride content than the Reduced salt Soy Sauce 1 obtained in Examples 12.

### [Example 14]

Reduced Salt Japanese Pickle Seasoning 1, which is a reduced salt food or beverage, was manufactured by adding 0.002 part by mass of the Salty Taste Enhancer A (0.035 part by mass as sodium lactate with respect to 100 parts by mass of salt) used in Example 1 to a reduced salt Japanese pickle seasoning (Reduced Salt Japanese Pickle Seasoning with Mild Salty Taste/Ebara Foods Industry Co., Inc., sodium chloride content: 5.7% by mass), which is a reduced salt food or beverage, and thoroughly mixing these. Japanese pickle seasoning having an ordinary sodium chloride content (sodium chloride content: 8.2% by mass). (Japanese Pickle Seasoning/Ebara Foods Industry Co., Inc., sodium chloride content: 8.2% by mass) was prepared. These two types of Japanese pickle seasoning were used to pickle vegetables and the pickled vegetables were tasted for comparison. The vegetables pickled with the Reduced Salt Japanese Pickle Seasoning 1, which is a reduced salt food or beverage, had salty taste strength and taste quality almost equal to those pickled with the Japanese pickle seasoning having an ordinary sodium chloride content.

### [Example 15]

Reduced Salt Soybean Paste 1, which is a reduced salt food or beverage, was manufactured by adding 0.004 part by mass of the Salty Taste Enhancer A (0.04 part by mass as sodium lactate with respect to 100 parts by mass of salt) used in Example 1 to 100 parts by mass of reduced salt soybean paste (Shinshu Reduced-salt Soybean Paste with barley malt, Miyasaka Brewing Company, Ltd., sodium chloride content: 9.8% by mass), which is a reduced salt food or beverage, and thoroughly mixing these. Soybean paste having an ordinary sodium chloride content (sodium chloride content: 12.2% by mass) was prepared. These two types of soybean paste were used to prepare miso (soybean paste) soups and these soups were tasted for comparison. The miso soup prepared with the Reduced Salt Soybean Paste 1, which is a reduced salt food or beverage, had salty taste strength and taste quality almost equal to those of the miso soup having an ordinary sodium chloride content.

### [Example 16]

Reduced Salt Worcester Sauce 1, which is a reduced salt food or beverage, was manufactured by adding 0.004 part by mass of the Salty Taste Enhancer A used in Example 1 to 100 parts by mass of reduced salt Worcester sauce (BullDog Worcester Sauce with 50% by mass reduced salt content/Bull-Dog Sauce Co., Ltd., sodium chloride content: 4.2% by mass), which is a reduced salt food or beverage, and thoroughly mixing these. Worcester sauce having an ordinary sodium chloride content (sodium chloride content: 8.4% by mass) was prepared. These two types of sauce were tasted for comparison. The Worcester Sauce 1, which is a reduced salt food or beverage, had salty taste strength and taste quality almost equal to those of the Worcester sauce having an ordinary sodium chloride content.

### Industrial Applicability

According to the method for enhancing a salty taste of a food or beverage of the present invention, the salty taste of the food or beverage can be enhanced without change in the taste quality by an extremely small amount of the salty taste enhancer, whereby a reduced salt food or beverage that has both salty and delicious tastes can be easily obtained.

## Claims

1. A method for enhancing a salty taste of a food or beverage containing sodium chloride, comprising:
adding a salty taste enhancer comprising sodium lactate and/or potassium lactate as active ingredient(s) to the food or beverage,
wherein the added amount of the salty taste enhancer is 0.0001 to 1.5 parts by mass as sodium lactate and/or potassium lactate contained in the salty taste enhancer with respect to 100 parts by mass of sodium chloride contained in the food or beverage.

2. The method according to claim 1, wherein the salty taste enhancer includes a calcium ion sequestering agent.

3. The method according to claim 1, wherein the salty taste enhancer is added as a salt composition comprising the salty taste enhancer and sodium chloride.

4. The method according to claim 3, wherein a part of the sodium chloride is substituted with potassium chloride.

5. The method according to claim 1, wherein the food or beverage is a reduced salt food or beverage.

## Patentansprüche

1. Verfahren zur Verstärkung des salzigen Geschmacks eines Nahrungsmittels oder Getränks, das Natriumchlorid enthält, umfassend:
Zugabe eines Salz-Geschmacksverstärkers, der Natriumlactat und/oder Kaliumlactat als aktive(n) Inhaltsstoff(e) enthält, zu dem Nahrungsmittel oder Getränk,
wobei die zugegebene Menge des Salz-Geschmacksverstärkers 0,0001 bis 1,5 Massenteile als Natriumlactat und/oder Kaliumlactat beträgt, die in dem Salz-Geschmacksverstärker enthalten sind, bezogen auf 100 Massenteile Natriumchlorid, das in dem Nahrungsmittel oder Getränk enthalten ist.

2. Verfahren nach Anspruch 1, wobei der Salz-Geschmacksverstärker einen Komplexbildner für Calcium-Ionen enthält.

3. Verfahren nach Anspruch 1, wobei der Salz-Geschmacksverstärker als eine Salzzusammensetzung zugegeben wird, welche den Salz-Geschmacksverstärker und Natriumchlorid enthält.

4. Verfahren nach Anspruch 3, wobei ein Teil des Natriumchlorids durch Kaliumchlorid ersetzt ist.

5. Verfahren nach Anspruch 1, wobei das Nahrungsmittel oder Getränk ein salzreduziertes Nahrungsmittel oder Getränk ist.

## Revendications

1. Procédé pour améliorer un goût salé d'un aliment ou d'une boisson contenant du chlorure de sodium, comprenant :
l'ajout d'un exhausteur de goût salé comprenant du lactate de sodium et/ou du lactate de potassium en tant que principe actif à l'aliment ou à la boisson,
dans lequel la quantité ajoutée de l' exhausteur de goût salé est de 0,0001 à 1,5 parties en masse sous forme de lactate de sodium et/ou de lactate de potassium contenu(s) dans l'exhausteur de goût salé par rapport à 100 parties en masse de chlorure de sodium contenu dans l'aliment ou la boisson.

2. Procédé selon la revendication 1, dans lequel l'exhausteur de goût salé comporte un agent séquestrant les ions calcium.

3. Procédé selon la revendication 1, dans lequel l'exhausteur de goût salé est ajouté sous forme de composition saline comprenant l'exhausteur de goût salé et du chlorure de sodium.

4. Procédé selon la revendication 3, dans lequel une partie du chlorure de sodium est remplacée par du chlorure de potassium.

5. Procédé selon la revendication 1, dans lequel l'aliment ou la boisson est un aliment ou une boisson à teneur réduite en sel.
